Europäisches Patentamt

European Patent Office

Office européen des brevets

(19)

(11) Veröffentlichungsnummer: **0 058 294**
**B1**

(12) # EUROPÄISCHE PATENTSCHRIFT

(45) Veröffentlichungstag der Patentschrift:
21.11.84

(51) Int. Cl.³: **B 60 J 3/02**

(21) Anmeldenummer: **82100189.8**

(22) Anmeldetag: **13.01.82**

(54) **Anordnung einer Sonnenblende oberhalb einer Seitenscheibe in einem Fahrzeug.**

(30) Priorität: **18.02.81 DE 3105848**

(43) Veröffentlichungstag der Anmeldung:
**25.08.82 Patentblatt 82/34**

(45) Bekanntmachung des Hinweises auf die Patenterteilung:
**21.11.84 Patentblatt 84/47**

(84) Benannte Vertragsstaaten:
**DE FR GB IT SE**

(56) Entgegenhaltungen:
**FR - A - 1 340 394**
**FR - A - 1 396 773**
**FR - A - 2 235 011**
**GB - A - 2 053 114**
**US - A - 2 559 471**
**US - A - 3 403 937**
**US - A - 3 853 370**
**US - A - 3 961 820**
**US - A - 4 090 732**

(73) Patentinhaber: **Gebr. Happich GmbH,**
**Postfach 10 02 49 Clausenbrücke 1,**
**D-5600 Wuppertal 1 (DE)**

(72) Erfinder: **Mahler, Gert, Kreuzstrasse 5,**
**D-5608 Radevormwald (DE)**
Erfinder: **Cziptschirsch, Kurt, Am Heckendorn 43,**
**D-5600 Wuppertal 2 (DE)**
Erfinder: **Oltmanns, Oltmann, Auf dem Kölnberg 1-5 13,**
**D-5000 Köln 50 (DE)**

**Beschreibung**

Die Erfindung bezieht sich auf die Anordnung einer Sonnenblende oberhalb einer vorderen Seitenscheibe in einem Fahrzeug der im Oberbegriff des Anspruchs 1 angegebenen Art.

Die Sonnenblendenkörper üblicher Sonnenblenden sind im allgemeinen klappbar oberhalb der Windschutzscheibe eines Fahrzeuges angeordnet und derart gelagert, daß sie auch jeweils zu einer der vorderen Seitenscheiben hin verschwenkt werden können. Damit ist es möglich, den Sonnenblendenkörper, je nachdem, ob die Sonnenstrahlen von vorn oder von der Seite einfallen, entsprechend einzustellen.

Diese bekannte Sonnenblendenanordnung ist bei der heutigen Fahrzeuggeneration ungünstig, weil insbesondere Personenkraftfahrzeuge eine relativ niedrige Bauhöhe und häufig auch einen räumlich eng begrenzten Fahrgastraum besitzen, so daß ein Fahrzeuglenker gezwungen ist, Kopfverrenkungen zu vollführen, wenn er den Sonnenblendenkörper von der Windschutzscheibe zur Seitenscheibe oder umgekehrt verschwenkt. Hinzu kommt, daß die von einem Kraftfahrzeug befahrenen Straßen häufig ihre Richtung wechseln, so daß auch die Sonnenstrahlen wechselseitig von vorn oder von der Seite kommen. Der Fahrzeuglenker muß daher dauernd den Sonnenblendenkörper verstellen oder in Kauf nehmen, daß er geblendet wird, wenn er den Sonnenblendenkörper einfach in der falschen Lage stehen läßt.

Im Hinblick auf die niedrige Bauhöhe der heutigen Fahrzeuge ist auch eine andere bekannte Sonnenblende (vgl. DE-U-1 850 299), die zwei Sonnenblenden körper aufweist, welche auf um 90° zueinander versetzten Stangen schwenkbar so gelagert sind, daß der eine Sonnenblendenkörper an ein vorderes Seitenfenster und der andere an die Windschutzscheibe heranklappbar ist, ungünstig angeordnet. Das gleiche gilt für eine Sonnenblendenanordnung, bei der der vor der Windschutzscheibe befindliche Sonnenblendenkörper mit einem zur Seitenscheibe hin verschwenkbaren Flügel ausgerüstet ist (vgl. z. B. DE-U-7 706 998).

Es ist weiterhin eine Sonnenblendenanordnung in einem Fahrzeug bekannt (vgl. z. B. DE-A-2 806 462), bei der der vor der Windschutzscheibe befindliche Sonnenblendenkörper mit einer eingelagerten Zunge ausgerüstet ist, welche zur vorderen Seitenscheibe herausziehbar ist und aus einem biegeelastischen Werkstoff besteht. Das Herausziehen des zusätzlichen, als Zunge ausgebildeten Sonnenblendenkörpers ist nur möglich, wenn der Hauptsonnenblendenkörper vollständig nach unten geklappt ist, was aber je nach Sonnenstand oftmals gar nicht erforderlich oder erwünscht ist.

Aus der US-A-3 961 820 ist es ferner bekannt, einen Sonnenblendenkörper drehbeweglich an parallel geführte Lenker aufzuhängen, die ihrerseits auch an der Fahrzeugkarosserie drehbeweglich gelagert sind.

Schließlich ist es bekannt, an den vorderen Seitenscheiben der Fahrzeuge übliche Sonnenblendenkörper anzuordnen, die um eine waagerechte Achse klappbar gelagert sind. Bei der Klappbewegung des Sonnenblendenkörpers wird seine den Lagern abgewandte Längskante auf einer kreisbogenförmigen Bahn relativ weit in den Fahrgastraum hineinbewegt, was bei engen räumlichen Verhältnissen als recht nachteilig empfunden wird.

Durch die Erfindung soll demgegenüber eine Sonnenblendenanordnung an einer vorderen Seitenscheibe eines Fahrzeuges geschaffen werden, die eine Beengung des Fahrgastraums bei der Überführung des Sonnenblendenkörpers aus der Nichtgebrauchslage in die Gebrauchslage und umgekehrt ausschließt. Des weiteren soll durch die Erfindung eine Abschirmung auch im vorderen, an die Windschutzscheibe anschließenden Eckbereich der Seitenscheibe gewährleistet sein.

Gemäß der Erfindung wird diese Aufgabe durch die im kennzeichnenden Teil des Anspruchs 1 angegebenen Merkmale gelöst.

Die erfindungsgemäße Anordnung bringt in verschiedener Hinsicht wesentliche Vorteile. Insbesondere kann der Sonnenblendenkörper, ohne den Fahrgastraum des Fahrzeugs dabei zu beengen, aus der Nichtgebrauchslage in die Gebrauchslage oder umgekehrt überführt werden. Dies ist besonders bei Fahrzeugen mit geringer Gesamthöhe und entsprechend geringer Kopffreiheit für die Fahrzeugbenutzer vorteilhaft. Die Überführung ist auch unabhängig davon, welche Position die vor der Windschutzscheibe angeordneten Sonnenblendenkörper einnehmen, durchführbar. Auch ist es nicht mehr zwingend erforderlich, daß der Sonnenblendenkörper Polstereigenschaften aufweist, denn seine Randkanten werden ja nicht mehr ins Fahrzeuginnere hereingeschwenkt. Die für die Überführung des Sonnenblendenkörpers aus der einen in die andere Endlage erforderlichen Lagerelemente können an seiner Rückseite angeordnet sein, so daß auch ein angenehmes Erscheinungsbild gewährleistet ist. Durch die Kugelgelenke und durch die kreisbogenförmige Führung wird insbesondere auch ein selbsttätiges Ausrichten des Sonnenblendenkörpers zur Ebene der Seitenscheibe bzw. zum Dachrahmen oder zur Dachrahmenverkleidung erzielt.

Weitere wesentliche Merkmale und zweckmäßige Ausgestaltungen der Erfindung sind in den Unteransprüchen gekennzeichnet.

Die Erfindung wird nachfolgend anhand von in der Zeichnung dargestellten Ausführungsbeispielen näher erläutert. Es zeigt

Fig. 1 den vorderen Eckbereich eines Fahrzeuges in schaubildlicher Darstellung, die die Anordnung von Sonnenblenden an der Windschutz- und einer Seitenscheibe verdeutlicht,

Fig. 2 in schematischer Darstellungsmanier die Sonnenblendenanordnung für eine Fahr-

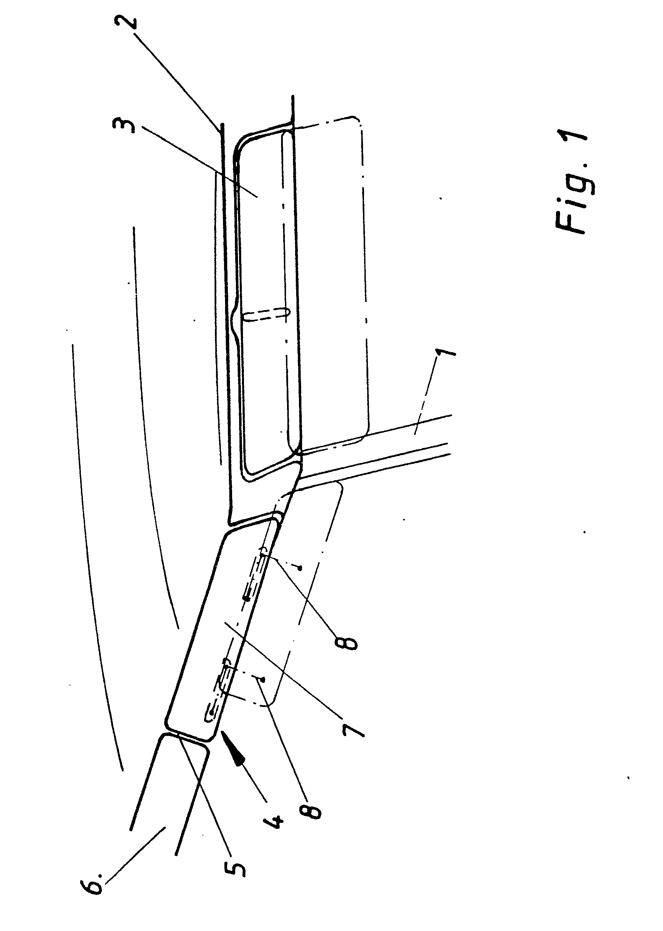

zeugseitenscheibe nach Fig. 1,

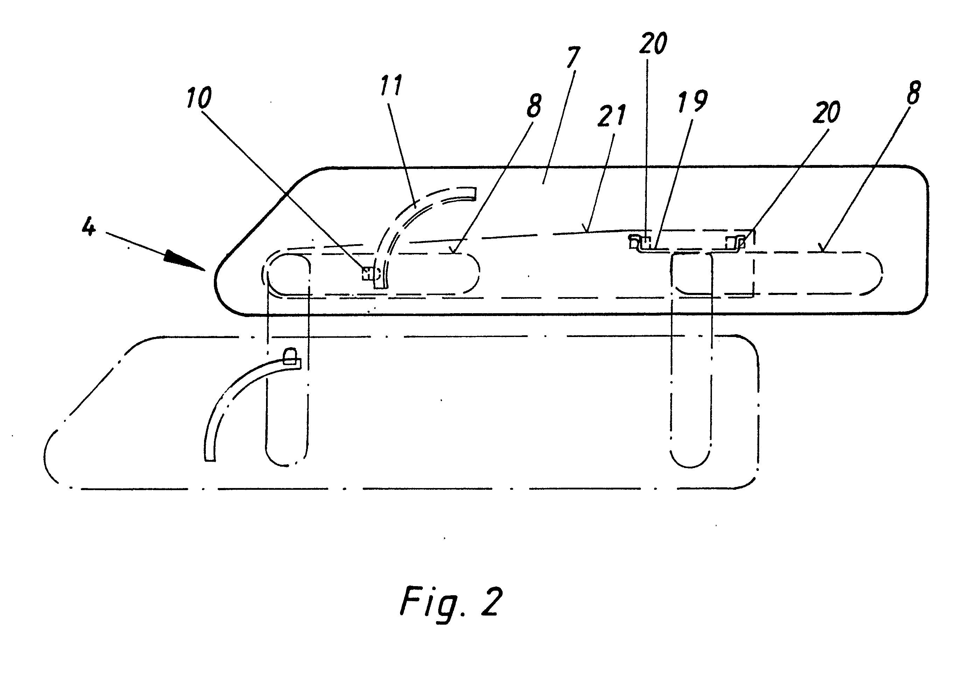

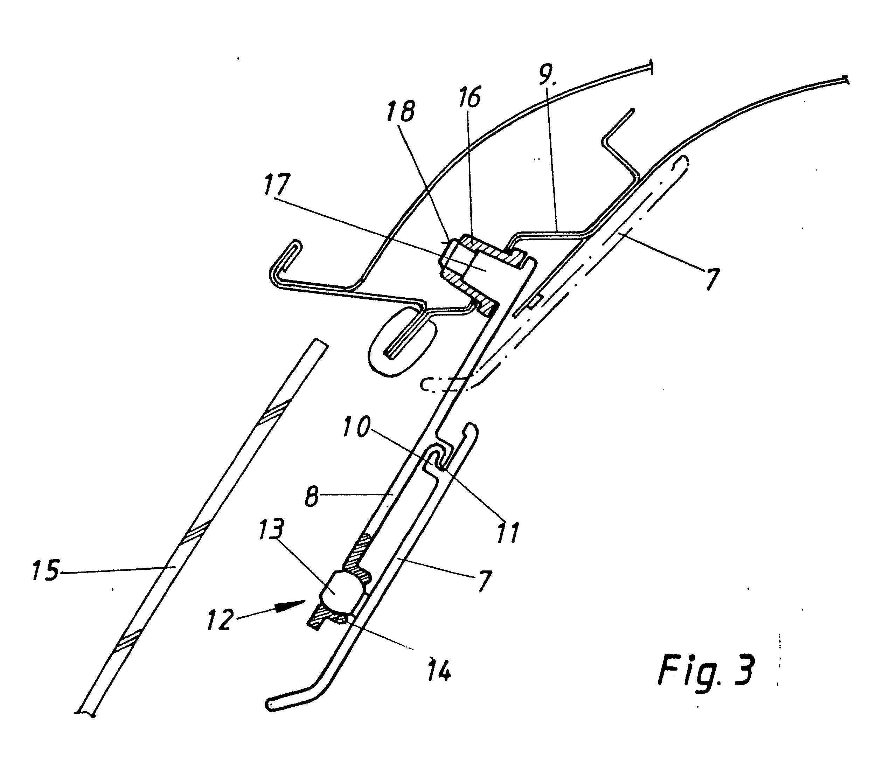

Fig. 3 eine Seitenansicht der Sonnenblendenanordnung nach Fig. 2 im montierten Zustand.

Der in Fig. 1 dargestellte Teilbereich eines Fahrzeuges zeigt eine sogenannte A-Säule 1, an die sich auf der Zeichnung nach rechts die nicht dargestellte Windschutzscheibe und nach links eine der vorderen Seitenscheiben 15 (vgl. Fig. 3) anschließt. An dem vorderen Dachrahmen und/oder an der vorderen Dachrahmen- bzw. Himmelverkleidung 2 ist eine übliche Sonnenblende 3 angeordnet, die in der strichpunktiert dargestellten Gebrauchslage einen Blendschutz gegen von vorn in das Fahrzeug einfallende Sonnenstrahlen bildet. Die Sonnenblende 3 kann in üblicher Weise klappbar oder auch in einer z. B. in der DE-PS 2 724 414 beschriebenen Weise verschiebbar gelagert sein.

Einen Blendschutz gegen von der Seite her in das Fahrzeug einfallende Sonnenstrahlen bietet die Sonnenblende 4, und zwar dann, wenn der in eine Ausnehmung 5 der seitlichen Dachrahmenverkleidung 6 eingepaßte Sonnenblendenkörper 7 in die strichpunktiert dargestellte Gebrauchslage überführt worden ist.

Beim Ausführungsbeispiel nach Fig. 1 ist der Sonnenblendenkörper 7 schwenkbeweglich gelagert, wozu zwei parallel zueinander geführte Lenker 8 vorgesehen sind, deren eines Ende jeweils am Sonnenblendenkörper 7 und deren anderes Ende jeweils am seitlichen Dachrahmen 9 (vgl. Fig. 3) angelenkt ist. Durch die parallel zu den Seitenflächen des Sonnenblendenkörpers 7 ausgerichteten Lenker 8 kann der Sonnenblendenkörper 7 auf- und abwärts und auch in Richtung zur A-Säule 1 bewegt werden, so daß ein wirkungsvoller Blendschutz gegeben ist. Um den Sonnenblendenkörper 7 insbesondere in den Endstellungen, aber auch in den Zwischenstellungen gegen ein ungewolltes Verstellen zu sichern, ist zumindest eine Anlenkung eines Lenkers 8 mit einer Reibeinrichtung, die im einzelnen nicht gezeigt ist, ausgerüstet.

Fig. 2 und 3 zeigen eine Sonnenblendenanordnung, die im wesentlichen der nach Fig. 1 entspricht. Der Sonnenblendenkörper 7 ist also auch hier über zwei parallel zueinander geführte Lenker 8 schwenkbeweglich am seitlichen Dachrahmen 9 gelagert, wobei an einem der Lenker 8 ein hakenförmiger Führungsnocken 10 angeordnet ist, der in eine am Sonnenblendenkörper 7 ausgebildete Führungsbahn 11 eingreift, die, im Querschnitt gesehen, eine umgekehrt hakenförmige Ausbildung wie der Führungsnocken 10 aufweist. Weiterhin ist bei der Ausführungsform nach Fig. 2 und 3 die Anlenkung der Lenker 8 am Sonnenblendenkörper 7 über jeweils ein Kugelgelenk 12 bewerkstelligt, wobei die Kugel 13 jeweils am Sonnenblendenkörper 7 und die Kugelpfanne 14 jeweils an den Lenkern 8 ausgebildet ist. Durch die Kugelgelenke 12 und die aus den Elementen 10, 11 gebildete Führung wird ein selbsttätiges Ausrichten des Sonnenblendenkörpers 7 zur Ebene der Seitenscheibe 15 bzw. zum Dachrahmen 9 oder zur Dachrahmenverkleidung 6 erzielt.

Für die den Kugelgelenken 12 abgewandte Anlenkung der Lenker 8 dient jeweils ein am Dachrahmen 9 befestigtes Lagergehäuse 16, in welches jeweils ein Lenker 8 mit einem angesetzten oder angeformten Drehlagerzapfen 17 eingreift. Der Drehlagerzapfen 17 ist durch den Pilzkopf 18 gegen ein Herausziehen aus dem Lagergehäuse 16 gesichert.

Fig. 2 läßt weiterhin die Anordnung einer an einem der Lagergehäuse 16 angeordneten Rastfeder 19 erkennen, die als U-förmig gestaltete Blattfeder ausgebildet ist und das ihr benachbarte freie Ende eines der Lenker 8 belastet. Die Rastfeder 19 greift mit ihren Seitenschenkeln in am Lagergehäuse 16 angeordnete Aufnahmen 20 ein. Wie die Zeichnung erkennen läßt, liegt die Rastfeder 19 im entlasteten Zustand auf einer Längskante des Lenkers 8 auf, wenn sich der Sonnenblendenkörper 7 in der Nichtgebrauchslage befindet und sichert daher den Sonnenblendenkörper 7 in dieser Endlage. Bei einer Überführung des Sonnenblendenkörpers 7 in die Gebrauchslage wird die Rastfeder 19 durch das dann ausschwenkende freie Ende des Lenkers 8 gespannt, so daß beim Bewegen des Sonnenblendenkörpers 7 eine entsprechende Reibungskraft zu überwinden ist.

Zweckmäßigerweise sind die Lagergehäuse 16 an einer Grundplatte 21 angeordnet oder einstückig mit dieser z. B. als Kunststoff-Spritzgußteil ausgebildet, wobei die Grundplatte 21 die Aufnahmen 20 für die Rastfeder 19 aufweist. Auf diese Weise läßt sich die gesamte Sonnenblendeneinheit vormontieren und im vormontierten Zustand am Dachrahmen 9, insbesondere durch eine Steckmontage, anbringen.

**Patentansprüche**

1. Anordnung einer aus einem Sonnenblendenkörper (7) und mit diesem verbundenen Lagerelementen bestehenden Sonnenblende (4) oberhalb einer vorderen Seitenscheibe (15) in einem Fahrzeug, wobei der Sonnenblendenkörper (7) etwa parallel zur Seitenscheibe (15) ausgerichtet und durch zwei sowohl an dem Sonnenblendenkörper (7) als auch an der Fahrzeugkarosserie drehbeweglich und parallel zueinander geführte Lenker (8) schwenkbeweglich auf- und abwärts gelagert ist, dadurch gekennzeichnet, daß an einem der Lenker (8) ein Führungsnocken (10) angeordnet ist, der in eine am Sonnenblendenkörper (7) ausgebildete kreisbogenförmige Führungsbahn (11) eingreift und daß die Lenker (8) über jeweils ein Kugelgelenk (12) am Sonnenblendenkörper (7) gelagert sind.

2. Anordnung nach Anspruch 1, gekennzeichnet durch eine unterschiedliche Länge der Lenker (8).

3. Anordnung nach einem der Ansprüche 1 oder 2, dadurch gekennzeichnet, daß zumindest eine Anlenkung eines Lenkers (8) mit einer Reibeinrichtung ausgebildet ist.

4. Anordnung nach einem der Ansprüche 1 bis 3, dadurch gekennzeichnet, daß zumindest ein Lenker (8) an seinem an dem Dachrahmen (9) angelenkten Endbereich von einer den Sonnenblendenkörper (7) zumindest in den Endstellungen sichernden Rastfeder (19) überspannt.

## Claims

1. An arrangement comprising a sun visor (4) having a sun visor body (7) and mounting elements connected thereto, which arrangement is disposed above a front side window (15) in a vehicle, the sun visor body (7) being aligned substantially parallel to the side window (15) and being mounted to swing upwards and downwards by means of two guides (8) displaceable parallel to each other and rotatable on the sun visor body (7) as well as on the vehicle bodywork, characterized in that a guide cam is arranged on one of the guides (8), which cam engages in an arcuate guide track (11) formed in the sun visor body (7), and in that the guides (8) are each mounted on the sun visor body (7) by way of a ball-and-socket joint (12).

2. An arrangement according to claim 1, characterized in that the guides (8) are of different lengths.

3. An arrangement according to claim 1 or claim 2, characterized in that at least one hinge of a guide (8) is formed by a friction device.

4. An arrangement according to any one of claims 1 to 3, characterized in that at least one guide (8) is biased at its end zone hinged to the roof frame (9) by a stop spring (19) which holds the sun visor body (7) at least in the end positions.

## Revendications

1. Installation d'un pare-soleil (4) comprenant un corps (7) et des éléments d'appui qui lui sont reliés au-dessus d'une vitre latérale antérieure (15) dans un véhicule, le corps (7) étant dirigé sensiblement parallèlement à la vitre latérale (15) et monté de façon à pouvoir pivoter vers le haut et vers le bas au moyen de deux bras (8) guidés de façon à pouvoir tourner à la fois sur le corps (7) et sur la carrosserie du véhicule et se déplacer parallèlement l'un par rapport à l'autre, caractérisé en ce qu'un ergot de guidage (10) est placé sur l'un des bras (8) et pénètre dans une glissière en forme d'arc de cercle formée sur le corps (7), et en ce que les bras (8) sont placés sur le corps (7) chacun au moyen d'une articulation sphérique (12) respective.

2. Agencement selon la revendication 1, caractérisé en ce que les bras (8) ont une longueur différente.

3. Agencement selon la revendication 1 ou 2, caractérisé en ce qu'une articulation d'un bras (8) au moins comporte un agencement de friction.

4. Agencement selon l'une des revendications 1 à 3, caractérisé en ce que l'un au moins des bras (8) subit dans sa zone terminale articulée au cadre de toit (9) l'action d'un ressort d'arrêt (19) immobilisant le corps (7) au moins dans les positions terminales.

*Fig. 1*

0 058 294

*Fig. 2*

0 058 294

Fig. 3

0 058 294